# EUROPEAN PATENT SPECIFICATION

(11) **EP 1 675 478 B1**
(45) Date of publication and mention of the grant of the patent: **07.11.2012**
(21) Application number: 04787038.1
(22) Date of filing: 28.09.2004
(51) Int. Cl.: A23L 1/24, A23D 7/01, A23D 7/02, A23D 7/015

(54) **REDUCED OIL EMULSION WITH VISCOSITY-BUILDING EMULSIFIER**
EMULSION MIT REDUZIERTEM ÖLGEHALT, DIE EINEN VISKOSITÄTSSTEIGERNDEN EMULGATOR ENTHÄLT
EMULSION HUILEUSE REDUITE CONTENANT UN EMULSIFIANT GENERATEUR DE VISCOSITE

(30) Priority: 24.10.2003 US 693475
(43) Date of publication of application: 05.07.2006
(73) Proprietor: Unilever N.V., 3013 AL Rotterdam (NL); Unilever PLC, London EC4Y 0DY (GB)
(72) Inventor: AQUINO, Leonardo Jose S., Unilever Bestfoods N.A., Englewood Cliffs, NJ 07632 (US); BIALEK, Jadwiga M., Unilever R & D Vlaardingen, 3133 AT Vlaardingen (NL); MELNIKOV, Sergey M., Unilever R & D Vlaardingen, NL-3133 AT Vlaardingen (NL)
(74) Representative: Rosen Jacobson, Frans Lucas M.
(86) International application number: PCT/EP2004/010847
(87) International publication number: WO 2005/039315

(56) References cited:
- EP-A- 0 477 827
- EP-A- 0 757 895
- WO-A-03/053149
- US-A- 5 011 701
- US-A- 5 690 981

## Description

### FIELD OF THE INVENTION

The present invention is directed to an edible emulsion comprising fibers. More particularly, the invention is directed to a reduced oil emulsion composition comprising insoluble fiber, thickener and a viscosity-building emulsifier. When, for example, the emulsion of this invention is employed to make a reduced oil mayonnaise composition, the resulting reduced oil mayonnaise composition unexpectedly has the taste, viscosity, mouthfeel and appearance of full oil mayonnaise. Moreover, the edible emulsion comprising insoluble fiber, thickener and viscosity-building emulsifier of this invention may, in addition to mayonnaise,be used as a base for dressings, soups, sauces, dips, spreads, fillings, drinks or the like, and for both hot, cold and frozen applications.

### BACKGROUND OF THE INVENTION

Edible emulsions are used as a base for many types of food products. Mayonnaise compositions, for example, comprise edible oil-in-water emulsions that typically have between 80 to 85% by weight oil, and egg yolk, salt, vinegar and water. Mayonnaise compositions are enjoyed by many consumers, and particularly, on sandwiches, in dips, with fish and other food applications.

The oil present in the edible emulsions used in such food products is generally present as droplets dispersed in the water phase. In addition to droplet size and the amount of droplets dispersed, the close packing of the oil droplets results in the characteristic rheological behavior of the emulsions used to make the desired food product (e.g., mayonnaise).

Notwithstanding the fact that many consumers enjoy the taste of full fat products, there is an increasing demand for food products prepared from edible emulsions that have less fat and calories than conventional full fat food products.

It is known that attempts have been made to formulate reduced fat and calorie food products, like mayonnaise compositions, but the resulting food products typically do not have the texture and sensorial properties associated with full fat containing products. The inferior texture is invariably related to the reduced levels of oil in the edible emulsions, resulting in food products that lack the sensorial properties of full fat products since reduced fat and calorie products have high levels (i.e., over 3.8% by weight) thickeners like starch and gum in lieu of oil. The replacement of oil with high levels of starch and gum is effective for minimizing calories in food products, but unfortunately causes the food product to be tacky (difficult to dissipate) within the mouth and very dull and opaque looking.

This invention, therefore, is directed to a reduced oil edible emulsion comprising insoluble fiber, thickener and a viscosity-building emulsifier. The edible emulsion of this invention can be used as a base to make a variety of food products, and unexpectedly, results in a food product that has the characteristics of a full fat product when less than the conventional amount of oil is employed. Furthermore, the food products made with the edible emulsion comprising insoluble fiber, thickener and viscosity-building emulsifier of this invention have, in addition to excellent texture and sensorial properties, the added health benefits associated with food products containing fiber. Such food products also have the benefit of being substantially free of carbohydrates; therefore, very desirable to high protein/low carbohydrate dieters.

### ADDITIONAL REFERENCES

Efforts have been made for preparing edible emulsions. In U.S.Patent Application No. 2002/0197382 A1, edible oil-in-water emulsions having a reduced content of oil are described.

Other efforts have been made for preparing edible emulsions. In U.S. Patent No. 6,039,998, freezable and low calorie spoonable dressings with fatty acid esterified propoxylated glycerin compositions are described.

Still other efforts have been made for preparing emulsions. In U.S. Patent No. 5, 690, 981, low calorie foodstuffs are described.

US-A-011701 discloses a low calorie food product having smooth, creamy, organoleptic characteristics, comprising microreticulated microcrystalline cellulose and less than 7 wt.% of digestible triglycerides. Significant portions of corn syrup and other carbohydrates like sucrose are taught.

EP-A-0477827 discloses a low fat mayonnaise product and method for making said mayonnaise product. The use of Avicil, a microcystalline cellulose fiber, is mentioned.

WO 03/053149 discloses an instant base composition that is suitable for the preparation of a spreadable emulsion with multiple functionality Recommended base composition formulas comprise at least 3.5% by weight starch.

EP-A-757895 describes no and low fat dressings having semi gel/pourable texture, wherein all or part of the fat is replaced with an amidated galacturonic acid methyl ester or pectin (LMA pectin). It is suggested that LMA pectin may also replace proteins like egg yolk, egg white, or milk proteins, such as caseinate, or whey protein.

None of the additional information above describes an edible emulsion having reduced oil content, insoluble fiber, thickener and viscosity-building emulsifier whereby the edible emulsion can be used to make a food product with characteristics, including visual characteristics, that are similar to those of food products comprising edible emulsions containing conventional amounts of oil.

### SUMMARY OF THE INVENTION

In a first aspect, the present invention which is defined by the claims is directed to an edible emulsion comprising:
a) from about 7.5 to about 80.0 % by weight of oil;
b) water;
c) 0.5 to 12.0 % by weight emulsifier comprising a viscosity-building emulsifier that at 2.0% by weight is partially or completely not soluble in acidified deionized water having a pH of less than or equal to 5.5, or a viscosity-building emulsifier that is at least about 50.0% by weight protein, or both;
d) about 0.1 to about 1.0 % by weight of insoluble citrus fiber; and
e) thickener
wherein the edible emulsion is coarse or smooth and further wherein viscosity building emulsifier makes up from 0.1 to 4.0 percent by weight of the edible emulsion, with the proviso that when chemical emulsifier is used, less chemical emulsifier is used than viscosity-building emulsifier.

In a second aspect, the present invention which is defined by the claims is directed to a method for making a reduced oil food product comprising the edible emulsion of the first aspect of this invention.

In a third aspect, the present invention which is defined by the claims is directed to the reduced oil food product comprising the edible emulsion of the first aspect of this invention.

Oil, as used herein, means triglycerides, and especially, those that are liquids at room temperature. Water, as used herein, means pure water or a solution thereof. Insoluble fiber means fiber suitable for human consumption and not water soluble whereby when the same is supplied as an additive composition, the additive composition is not more than 50% by weight soluble fiber, based on total weight of soluble and insoluble fiber in the additive composition. Edible emulsion with conventional amounts of oil means an emulsion, not in final food product form, suitable for a real mayonnaise base and comprising about 80.0 - 85.0% by weight oil, based on total weight of the edible emulsion. Texture and sensorial properties associated with full fat products means that food products made with the edible emulsions of the present invention unexpectedly have the taste, viscosity, mouthfeel and appearance consistent with full fat products wherein mouthfeel consistent with full fat products means not sticky or tacky as is the case with food products having high levels of starch and gum, such that the same breakdown and dissipate in the mouth in a time and manner similar to that of full fat products. Appearance consistent with full fat products means not opaque and unattractive, but oily-looking.

Coarse, as used herein means the insoluble fibers are detectable in the emulsion thereby producing discernible grainy or particle comprising characteristics when in the mouth. Smooth, as used herein, means no discernible grainy or particle comprising characteristics when in the mouth. Partially soluble means not 100.0% dissolved. Viscosity-building means able to increase viscosity by a factor of at least 10.0% in a product when compared to other emulsifiers used in the same product and at the same weight percent. Reduced oil food product, as used herein, means a food product with insoluble fibers and less oil than a food product having the standard oil content (ie., the amount of oil known to be used in a particular food product in the absence of insoluble fibers). Food product, as used herein, means a product ready for consumption and comprising the edible emulsion of this invention. Identical food products mean food product (X) and food product (X*) are food products of the same category, for example, (X) and (X*) may both be mayonnaise compositions or dips. Substantially free of carbohydrates means 3.8% by weight or less, and preferably, between about 2.0 and about 3.5% by weight starch, based on total weight of the food product.

### DETAILED DESCRIPTION OF THE PREFERRED EMBODIMENTS

The only limitation with respect to the type of oil used to make the edible emulsion of this invention is that the oil is suitable for human consumption. Illustrative examples of the types of oil which may be used in this invention include, without limitation, those which are liquid at ambient temperature like avocado, mustard, coconut, cottonseed, fish, flaxseed, grape, olive, palm, peanut, rapeseed, safflower, sesame, soybean, sunflower, mixtures thereof and the like.

Other types of oils which may be used in this invention are solid at ambient temperature. Illustrative examples of the oils which are solid at room temperature and suitable for use in this invention include, without limitation, butter fat, chocolate fat, chicken fat, coconut oil, hydrogenated palm kernel oil, mixtures thereof and the like.

In a preferred embodiment, the oil used in this invention is a liquid at ambient temperature. In a most preferred embodiment, the oil used in this invention is soybean, sunflower or rapeseed oil or a mixture thereof.

The amount of oil used in the edible emulsion of this invention is more than about 7.5 weight percent and less than about 80.0 weight percent, based on total weight of the edible emulsion. Preferably, the amount of oil employed in the edible emulsion is from about 15.0% to about 80.0%, and most preferably, from about 20.0 to about 60.0% by weight, based on total weight of the edible emulsion and including all ranges subsumed therein.

The water used in this invention can be pure water, tap water, bottled water, deionized water, spring water, or a mixture thereof. Thus, the water used in this invention may be an aqueous solution comprising salts or minerals or both. Typically, water makes up the balance of the edible emulsion and the food product made with the same.

Regarding the insoluble fibers suitable for use in this invention, such fibers are found, in citrus fruits. Preferred insoluble fibers suitable for use in this invention can be recovered from tomatoes, peaches, pears, apples, plums, lemons, limes, oranges, grapefruits or mixtures thereof. The edible emulsion of this invention comprises from about 0.10 to about 1.0%, and preferably, from about 0.1 to about 0.75%, and most preferably, from about 0.15 to about 0.50% by weight insoluble fibers, based on total weight of the edible emulsion, and including all ranges subsumed therein. Such insoluble fibers are commercially available from suppliers like Herbstreith & Fox under the Herbacel name. These insoluble fibers typically have lengths from about 25 to about 400 microns, and preferably, from about 50 to 185 microns, and most preferably, from about 100 to about 165 microns, including all ranges subsumed therein. The widths of such fibers are typically between about 3.0 to about 20.0 microns, and preferably, from about 5.0 to about 10.0 microns.

The emulsifier used in this invention is typically a mixture of emulsifiers. The first emulsifier selected usually has an HLB of greater than about 8.0, and preferably, greater than about 11.0, and most preferably, from about 12.0 to about 18.0, including all ranges subsumed therein. Illustrative examples of such an emulsifier suitable for use in the emulsifier mixture employed in this invention include, without limitation, PEG 20 tristearate, PEG 20 trioleate, PEG 20 monostearate, PEG 20 monooleate, PEG 20 monopalmitate and PEG 20 monolaurate sorbitan, derivatives thereof, mixtures thereof and the like, also made available by ICI Surfactants under the names Tween or Span. The preferred emulsifier employable in this invention is, however, a protein, like fruit, vegetable (e.g., pea protein), milk (e.g., whey) or soy protein, or mixtures thereof. Another preferred protein suitable for use in this invention is phospholipoprotein (e.g., phospholipoprotein present in egg yolk, whole egg or enzyme modified egg), and especially, egg yolk derived phospholipoprotein modified with phospholipase A as disclosed in U.S. Patent No. 5,028,447.

The viscosity-building emulsifier that at 2.0% by weight is partially or completely not soluble in acidified deionized water having a pH of ≤5.5 and the emulsifier that is at least about 50.0% by weight protein (preferably at least about 70.0% by weight protein) are both preferably suitable for human consumption and desired in order to enhance not only the rheological characteristics of the edible emulsion of the present invention but also the appearance of the same.

Illustrative examples of the types of viscosity-building emulsifiers that are partially or completely not soluble in acidified deionized water having a pH of ≤5.5 include, without limitation, those generally classified as caseins. Preferred emulsifiers in this category include an alpha-casein, epsilon-casein, beta-casein, kappa-casein, mixtures thereof or the like. Especially preferred viscosity building emulsifiers suitable for use in this invention are casein salts like potassium caseinate, sodium caseinate, ammonium caseinate, mixtures thereof or the like.

The viscosity building emulsifiers that are at least about 50.0% (and preferably at least about 70.0%) by weight protein and suitable for use in this invention include lactalbumin, lactoglobulins, laotferrin, mixtures thereof or the like. Especially preferred viscosity-building emulsifiers in this class include protein comprising material that is not denatured and suitable to adsorb to oil droplet interfaces within the edible emulsion. Such a viscosity-building emulsifier can be, for example, be animal or plant derived and often becomes partially or completely not soluble in aqueous solutions having a pH below about 2.0. In an especially preferred embodiment, a solution of protein aggregates, like whey protein aggregates, made by first heating a native whey emulsifier to above 70°C at a pH preferably above the isoelectric point (with substantially little to no salt {≤0.1} being present) may be used, where whey protein sold under the Bipro name is the often preferred soluble aggregate precursor.

The total amount of emulsifier employed in the edible emulsion of this invention is from 0.5 to 12.0%, and preferably, from about 0.5% to about 8.0%, and most preferably, from about 1.5 to about 6.5% by weight emulsifier, based on total weight of the edible emulsion and including all ranges subsumed therein. However, the edible emulsion comprises from 0.1 to 4.0, and preferably, from about 0.125 to about 3.0, and most preferably, from about 0.15 to about 1.75% by weight viscosity-building emulsifier, based on total weight of the edible emulsion and including all ranges subsumed therein, with the proviso that the amount of chemical emulsifier employed does not exceed the amount of viscosity-building emulsifier.

When making the edible emulsion comprising insoluble fibers of the present invention, emulsifier is typically added to the water, or oil or both water and oil. Likewise, the insoluble fibers may also be added to the water or oil, or both water and oil, either before, during or after the addition of the emulsifier. In a preferred embodiment, the insoluble fibers are added before emulsion formation is completed. The resulting water and oil phases can be mixed in a conventional mixer (e.g., under moderate sheer) to produce an edible coarse emulsion suitable for use as a base for food products. Such a coarse emulsion comprises oil droplets wherein at least about 75%, and preferably, at least about 85.0%, and most preferably, at least about 95.0% of all of the oil droplets present in the coarse emulsion have a diameter that is greater than about 2.5 µm, and preferably, greater than about 5.0 µm, and most preferably, between about 10.0 to about 200.0 µm.

If, on the otherhand, an edible emulsion with a smooth texture is desired, optionally, the coarse edible emulsion may be homogenized in, for example, a high pressure homogenizer. The homogenization step is typically carried out under pressures from about 20.0 to about 650.0 bar, and preferably, from about 40.0 to about 600.0 bar, and most preferably, from about 45.0 to about 550.0 bar, including all ranges subsumed therein. Typically, such a homogenization step is carried out at a temperature from about 15.0°C to about 70°C (preferably about ambient temperature) and for enough time to produce oil droplets (in the edible emulsion) whereby at least about 80.0% of the total amount of oil droplets in the emulsion have a diameter which is less than about 10.0 µm. In a preferred embodiment, at least about 85.0% of the total amount of oil droplets present in the edible emulsion have a diameter which is less than about 8.0 µm. In an especially preferred embodiment, at least about 95.0% by weight of all oil droplets present within the edible emulsion have a diameter which is less than about 5.0 µm.

The preferred thickeners suitable for use in this invention include conventional food grade starches and gums, and preferably, a mixture of the same. The starches are typically added to water to make a paste comprising about 1.0 to about 15.0% by weight starch, based on total weight of starch and water, including all ranges subsumed therein. At least about 50.0%, and preferably, about 100.0% of the paste is added and mixed in to the edible emulsion after the edible emulsion is has been homogenized. The gum is typically added anytime before or after the emulsion is made and thoroughly mixed within the same.

The Food grade starches that may be used in this invention include modified, non-modified, instant or cook-up starches as well as mixtures of the same. Such starches (e.g., corn, waxy maize, potato, rice, tapioca, wheat or mixtures thereof) are known thickening agents and often made commercially available from suppliers like National Starch and Chemical Company, Corn Products International and E.W. Staley Manufacturing Company. Cook-up starches are the generally preferred starches used in the edible emulsion of the present invention, with SnowFlake cook-up starch from Corn Products International being especially preferred. The amount of starch used in the food products made with the edible emulsion of the present invention is uncharacteristically low and usually from about 0.5 to about 3.5, and preferably, from about 1.0 to about 3.5, and most preferably, from about 2.5 to about 3.5% by weight starch, based on total weight of the food product, including all ranges subsumed therein.

Illustrative examples of the preferred gums suitable for use in this invention include cellulose, locust bean, xanthan, carrageenan, guar gum, mixtures thereof and the like. Such gums typically make up from about 0.1 to about 0.3% by weight of the total weight of the food product comprising the edible emulsion, including all ranges subsumed therein.

It should be noted that the edible emulsion comprising insoluble fibers disclosed herein preferably has an oil-in-water phase. Thus, it is within the scope of this invention for the edible emulsion comprising insoluble fibers to be a single phase emulsion or a multiple phase emulsion, like a water-in-oil-in-water emulsion.

It is particularly noted herein that if heat treatment, like pasteurization, is not desired, the edible emulsion described herein may be acidified in order to inhibit microbiological growth. When acidified and a viscosity-building emulsifier that at 2.0% by weight is partially or completely not soluble in acidified deionized water having a pH of ≤5.5 is employed, the food product typically has enough acidulant added so that the pH of the same is from about 2.75 to about 5.5, and preferably, from about 2.85 to about 5.50, and most preferably, from about 3.00 to about 4.00, including all ranges subsumed therein. In a preferred embodiment, at least about 50.0% by weight of the acid employed is added after homogenization and in a most preferred embodiment, about 100% of the acid employed is added after homogenization when the viscosity building emulsifier is one that at 2.0% by weight is partially or completely not soluble in acidified deionized water having a pH of ≤ about 5.5.

There is no limitation with respect to the type of acidulant employed in this invention other than that the acidulant is one which may be used in formulations suitable for human consumption. Illustrative examples of the types of acidulants which may be used in this invention include, without limitation, acetic acid, citric acid, hydrochloric acid, lactic acid, malic acid, phosphoric acid, gluconodelta-lactone, mixtures thereof and the like. In a preferred embodiment, the acidulant employed in this invention is a mixture of hydrochloric or phosphoric acid, and lactic acid, with lactic acid making up no more than about 40.0% by weight of the total weight of the acidulant mixture. It is noted that acidulant may be added before or after the edible emulsion with insoluble fiber is made. In an especially preferred embodiment, however, acidulant is added after the emulsion is made.

It is noted that in lieu of oil or in combination with oil, conventional fat substitutes may be used. Preferred fat substitutes employable in this invention include fatty acid-esterified alkoxylated glycerin compositions as well as sucrose fatty acid esters. The former and latter are described in U.S. Patent Nos. 5,516,544 and 6,447,824, respectively . When employed, such conventional fat substitutes preferably make up at least about 30.0%, and most preferably, at least about 75.0% of the total weight of the oil in the emulsion.

The edible emulsions of this invention may be combined with optional additives to make a food product ready for consumption. Preferred optional additives which may be employed in the food products made with edible emulsion of the present invention include mustard flour, chocolate, nut paste, salt (and other spices and seasonings), vitamins, artificial flavors and colors (e.g., beta carotene) fruit puree, preservatives, antioxidants, chelators, meat like ham and bacon bits or particulates, buffering agents, vegetable bits or particulates, fruit bits or particulates, cheese, mixtures thereof and the like. Such optional additives, when used, collectively, do not make up more than about 40.0% by weight of the total weight of the food product.

When preparing the food product ready for consumption, the optional additives may be added to water and/or oil before the edible emulsion comprising insoluble fiber is made, but preferably the optional additives are mixed in after the emulsion is made (especially when the optional additives are large, like fruit or bacon bits). In a preferred embodiment, the resulting food product made with the edible emulsion comprising insoluble fiber of the present invention comprises less than about 75.0%, and preferably, less than about 55.0%, and most preferably, from about 6.0 to about 35.0% by weight oil, based on total weight of the food product and including all ranges subsumed therein.

The preferred preservatives suitable for use in this invention include sodium benzoate, potassium benzoate, potassium sorbate, sorbic acid, benzoic acid, mixtures thereof and the like. Anti-oxidants suitable for use in this invention include a tocopherol, ascorbic acid, ascorbyl palmitate, tertiary-butyl hydroquinone, mixtures thereof and the like. Chelators suitable for use in this invention include EDTA and its salts, citric acid, sodium tripolyphosphate, sodium carbonate, potassium carbonate, mixtures thereof and the like.

The fruit and vegetable bits that may be used in food products comprising the edible emulsion of this invention are typically small enough to fit through the orifice present in a conventional squeeze bottle. The vegetable bits often include peppers, carrots, cabbage, onion, broccoli, mixtures thereof and the like. The fruit bits often include pears, apples, grapes, tomatoes, mixtures thereof and the like.

The cheese suitable for use in this invention can be skim, part skim or full fat cheese. Typical non-limiting examples of the types of cheese (including processed cheese) suitable for use in this invention include gouda, edam, leyden, cheddar, goat, chesire, stilton, mozzarella, cream cheese, brie, feta, tilsit, mixtures thereof and the like. When cheese is employed to make the food product, it is preferred that the same be melted prior to being added to the edible emulsion or any of its precursor phases. Often, the final food product will comprise from about 10.0% to about 35.0% by weight cheese.

Still other additives which may be optionally added to the food products of this invention include protein sources and sweeteners. The former include caseinate and skimmed milk powder and the latter include syrups, sucrose, glucose, saccharin, aspartame, dextrose, lactose, levelose, maltose, fructose, mixtures thereof and the like.

The viscosity of the food products made with the edible emulsion comprising insoluble fiber as disclosed herein is greater than about 3,000 and less than about 150,000 centipoise. When a sauce or pourable dressing is, for example, the desired food product, the viscosity of the food product is preferably from about 4,000 to about 10,000 centipoise, and most preferably, from about 4,350 to about 6,000 centipoise.

When the desired food product is, for example, a filling, dip or spoonable dressing, the viscosity of the food product is preferably from about 12,000 to about 120,000 centipoise, and most preferably, from about 16,000 to about 80,000 centipoise, whereby the viscosity of the food product is measured on a Haake Rheometer (Rotovisco RV20) at room temperature using a set of concentric cylinders (or bob-in-cup) with a 1 mm gap, the bob having a diameter of 1.0 cm and length of 1.0 cm. The inner cylinder or bob starts rotating from 0 shear and ramps up to a shear rate of 134 sec⁻¹ in 542 sec. By way of comparison, the viscosity values refer to the shear rate of 10 sec⁻¹.

The packaging for the food products comprising the edible emulsion of this invention is often a glass jar, food grade sachet or squeezable plastic bottle. Sachets are preferred for food service applications, and a plastic bottle is preferred for domestic use.

The examples which follow are provided to facilitate an understanding of the present invention. The examples are not intended to limit the scope of the claims.

### Example 1

Low Oil Mayonnaise food products having the edible emulsion of this invention were made by mixing the following phases:

| A. | Ingredient | Percent by Weight** |
|---|---|---|
| | Stabilized | |
| | Egg Yolk (10.0% NaCl) | 3.2 - 3.7 |
| | Sugar | 2.40 - 3.10 |
| | Salt | 2.00 - 2.50 |
| | Flavor | 0.08 - 0.13 |
| | Beta Carotene (1.0%) | 0.01 - 0.03 |
| | Sodium Caseinate | 0.4 - 0.6 |
| | Tap Water | 7.0 - 10.0 |

| B. | Ingredient | Percent by Weight** |
|---|---|---|
| | Vegetable Oil | 29.0 - 35.0 |

| C. | Ingredient | Percent by Weight** |
|---|---|---|
| | Citrus fiber* | 0.22 - 0.26 |
| | Tap water | 5.0 - 8.0 |

| D. | Ingredient | Percent by Weight** |
|---|---|---|
| | Tap water | Balance |

| E. | Ingredient | Percent by Weight** |
|---|---|---|
| | Vinegar (12%) | 1.8 - 2.2 |
| | Lactic acid (50%) | 0.18 - 0.26 |
| | Phosphoric Acid (85%) | 0.05 - 0.07 |
| | Xanthan gum | 0.1 - 0.3 |
| | Modified starch | 2.5 - 3.5 |

| | | |
|---|---|---|
| * AQ + F Plus, as made commercially available by Herbstreith & Fox ** Percent by weight of food product | | |

Phases (A) through (D) were combined and mixed under moderate shear, at atmospheric pressure and ambient temperature in a conventional mixer to produce a coarse emulsion. The coarse emulsion was then subjected to a homogenizer (e.g., APV Gaulin Homogenizer) pressurized to about 200 bar and at about 20°C. The resulting smooth emulsion was combined with the acidulant mixture of phase (E), mixed well under moderate shear and filled into glass jars:
The resulting low oil mayonnaise compositions had viscosities of about 25,000 centipoise and pH values of about 3.4

### Example 2

Low mayonnaise food products similar to those made in Example 1 were tested for surface shine, visible firmness, viscosity and rate of dissipation as follows:
Fifteen (15) trained panelists were given 2.0 ml samples of commercially available Real Mayonnaise (75-80% by weight oil), commercially available light mayonnaise (32-37% by weight oil), and the low oil mayonnaise (30% by weight oil) made with the edible emulsion of the present invention. The samples were tasted and mouths were rinsed with water between each sample. The panelists were also given jars of the above-identified mayonnaise types in order to assess visual appearances.

| | Real Mayonnaise | Light Mayonnaise | Low Oil Mayonnaise |
|---|---|---|---|
| Surface shine | 11.47 | 10.57 s.d. | 11.49 |
| Visible firmness | 10.45 | 11.45 s.d. | 10.13 |
| Viscosity | 8.37 | 9.00 s.d. | 12.10 |
| Rate of dissipation | 12.21 | 11.49 s.d. | 12.10 |

s.d. indicates significant statistical differences versus real mayonnaise and the low oil mayonnaise of this invention. The results unexpectedly show that food products, like low oil mayonnaise compositions, unexpectedly look, taste and have a mouthfeel similar to that of real (full-fat) mayonnaise and significantly better than conventional light mayonnaise products.

## Claims

1. An edible emulsion comprising:
(a) From about 7.5 to about 80.0 % by weight oil;
(b) Water;
(c) 0.5 to 12.0 percent by weight emulsifier comprising a viscosity-building emulsifier that at 2.0% by weight is partially or completely not soluble in acidified deionized water having a pH of less than or equal to 5.5 or a viscosity-building emulsifier that is at least about 50% by weight protein, or both
(d) About 0.1 to about 1.0 % by weight of insoluble citrus fibers; and
(e) Thickener
wherein the edible emulsion is coarse or smooth and further wherein viscosity building emulsifier makes up from 0.1 to 4.0 percent by weight of the edible emulsion, with the proviso that when chemical emulsifier is used, less chemical emulsifier is used than viscosity-building emulsifier.

2. The edible emulsion according to claim 1 wherein the edible emulsion is an oil-in-water emulsion or a multiple emulsion comprising an oil-in-water phase.

3. The edible emulsion according to claim 1 or 2 wherein the oil is avocado, mustard, coconut, cottonseed, fish, flaxseed, grape, olive, palm, peanut, rapeseed, safflower, sesame, soybean, sunflower, butter fat, chocolate fat, chicken fat, coconut oil, or a mixture thereof.

4. The edible emulsion according to any one of the preceding claims wherein the emulsifier is a mixture of emulsifiers comprising from about 0.1 to about 2.5% by weight viscosity-building emulsifier.

5. The edible emulsion according to any one of the preceding claims wherein at least one emulsifier in the mixture of emulsifiers has an HLB of greater than about 8.0.

6. The edible emulsion according to any one of the preceding claims wherein the edible emulsion is a coarse emulsion comprising oil droplets, further wherein at least about 75.0% of all droplets present have a diameter that is greater than about 2.5 :m.

7. The edible emulsion according to any one of the preceding claims wherein the edible emulsion is a smooth emulsion comprising oil droplets, further wherein at least about 80.0% of all oil droplets present are less than 10.0 :m.

8. The edible emulsion according to any one of the preceding claims wherein the thickener is a starch, gum or mixture thereof.

9. The edible emulsion according to claim 8 wherein the thickener is a mixture of starch and gum.

10. A method for making an edible emulsion according to any one of claims 1-9, comprising the steps:
(a) mixing, in no particular order, oil, water, insoluble citrus fiber, thickener and 0.5 to 12.0% by weight emulsifier comprising a viscosity-building emulsifier that at 2.0% by weight is partially or completely not soluble in acidified deionized water having a pH of less than or equal to 5.5 or a viscosity-building emulsifier that is at least about 50% by weight protein, or both to make a coarse emulsion
(b) recovering the course emulsion
wherein the course emulsion may optionally be homogenized in a homogenizer to produce a smooth emulsion and further wherein viscosity building emulsifier makes up from 0.1 to 4.0% by weight of the edible emulsion, with the proviso that that when chemical emulsifier is used, less chemical emulsifier is used than viscosity-building emulsifier.

11. The method for making an edible emulsion according to claim 10 wherein the coarse emulsion is homogenized in a homogenizer and the homogenizer is pressurized from about 20.0 to about 650.0 bar and at a temperature from about 15°C to about 70°C.

12. The method for making an edible emulsion according to claim 10 further comprising the step of adding acidulant wherein the acidulant is added before or after the coarse emulsion is made.

13. A food product comprising an edible emulsion according to any of claims 1-9, wherein the food product has a viscosity greater than about 3,000 centipoise and less than about 150,000 centipoise.

14. The food product according to claim 13 wherein the food product is a dressing, soup, sauce, dip, spread, filling or drink.

15. The food product according to claim 15 wherein the emulsifier mixture comprises egg when the food product is mayonnaise.

16. The food product according to claim 16 wherein the mayonnaise comprises less than about 75.0% by weight oil and displays mouth dissipation similar to mouth dissipation of full fat mayonnaise.

17. The food product according to claim 16 wherein the mayonnaise displays a surface shine similar to surface shine of full fat mayonnaise.

18. The food product according to claim 16 wherein the mixture comprises sodium caseinate or whey protein aggregates or both.

19. The food product according to claim 13 wherein the food product comprises 3.8% by weight or less starch.

## Patentansprüche

1. Genusstaugliche Emulsion, die Folgendes aufweist:
(a) etwa 7,5 bis etwa 80 Gew.-% Öl;
(b) Wasser;
(c) 0,5 bis 12,0 Gew.-% Emulgator, der einen die Viskosität erhöhenden Emulgator, der bei 2,0 Gew.-% in angesäuertem, deionisiertem Wasser mit einem pH-Wert von weniger als oder gleich 5,5 teilweise oder vollständig unlöslich ist, oder einen die Viskosität erhöhenden Emulgator, der zumindest etwa 50 Gew.-% Protein ist, oder beides aufweist;
(d) etwa 0,1 bis etwa 1,0 Gew.-% unlösliche Zitrusfasern; und
(e) Verdickungsmittel;
wobei die genusstaugliche Emulsion grob oder glatt ist und wobei ferner der die Viskosität erhöhende Emulgator 0,1 bis 4,0 Gew.-% der genusstauglichen Emulsion ausmacht, mit der Maßgabe, dass bei Verwendung eines chemischen Emulgators weniger chemischer Emulgator verwendet wird als die Viskosität erhöhender Emulgator.

2. Genusstaugliche Emulsion nach Anspruch 1,
wobei die genusstaugliche Emulsion eine Öl-in-Wasser-Emulsion oder eine Mehrfachemulsion ist, die eine Öl-in-Wasser-Phase aufweist.

3. Genusstaugliche Emulsion nach Anspruch 1 oder 2,
wobei das Öl Avocadoöl, Senföl, Kokosöl, Baumwollsamenöl, Fischöl, Leinöl, Traubenkernöl, Olivenöl, Palmöl, Erdnussöl, Rapsöl, Färberdistelöl, Sesamöl, Sojaöl, Sonnenblumenöl, Butterfett, Schokoladenfett, Hühnerfett, Kokosöl oder ein Gemisch davon ist.

4. Genusstauglichen Emulsion nach einem der vorstehenden Ansprüche,
wobei der Emulgator ein Gemisch von Emulgatoren ist, das etwa 0,1 bis etwa 2,5 Gew.-% die Viskosität erhöhenden Emulgator aufweist.

5. Genusstaugliche Emulsion nach einem der vorstehenden Ansprüche,
wobei zumindest ein Emulgator im Emulgatorgemisch einen HLB-Wert von mehr als etwa 8,0 aufweist.

6. Genusstaugliche Emulsion nach einem der vorstehenden Ansprüche,
wobei die genusstaugliche Emulsion eine grobe Emulsion ist, die Öltropfen aufweist, wobei ferner mindestens etwa 75,0 % aller vorhandenen Tropfen einen Durchmesser aufweisen, der größer als etwa 2,5 µm ist.

7. Genusstaugliche Emulsion nach einem der vorstehenden Ansprüche,
wobei die genusstaugliche Emulsion eine glatte Emulsion ist, die Öltropfen aufweist, wobei ferner mindestens etwa 80,0 % aller vorhandenen Öltropfen kleiner als 10,0 µm sind.

8. Genusstaugliche Emulsion nach einem der vorstehenden Ansprüche,
wobei das Verdickungsmittel Stärke, Gummi oder ein Gemisch davon ist.

9. Genusstaugliche Emulsion nach Anspruch 8,
wobei das Verdickungsmittel ein Gemisch von Stärke und Gummi ist.

10. Verfahren zum Herstellen einer genusstauglichen Emulsion nach einem der Ansprüche 1 bis 9,
das die folgenden Schritte aufweist:
(a) Mischen von Öl, Wasser, unlöslichen Zitrusfasern, Verdickungsmittel und 0,5 bis 12,0 Gew.-% Emulgator ohne bestimmte Reihenfolge, wobei der Emulgator einen die Viskosität erhöhenden Emulgator, der bei 2,0 Gew.-% in angesäuertem, deionisiertem Wasser mit einem pH-Wert von weniger als oder gleich 5,5 teilweise oder vollständig unlöslich ist, oder einen die Viskosität erhöhenden Emulgator, der zumindest etwa 50 Gew.-% Protein ist, oder beides aufweist, um eine grobe Emulsion herzustellen;
(b) Gewinnen der groben Emulsion,
wobei die grobe Emulsion gegebenenfalls in einem Homogenisierapparat homogenisiert werden kann, um eine glatte Emulsion zu erzeugen, und wobei ferner der die Viskosität erhöhende Emulgator bis zu 0,1 bis 4,0 Gew.-% der genusstauglichen Emulsion ausmacht, mit der Maßgabe, dass bei Verwendung eines chemischen Emulgators weniger chemischer Emulgator verwendet wird als die Viskosität erhöhender Emulgator.

11. Verfahren zum Herstellen einer genusstauglichen Emulsion nach Anspruch 10, wobei die grobe Emulsion in einem Homogenisierapparat homogenisiert wird und der Homogenisierapparat auf etwa 20,0 bis etwa 650,0 bar unter Druck gesetzt wird und eine Temperatur von etwa 15 bis etwa 70°C hat.

12. Verfahren zum Herstellen einer genusstauglichen Emulsion nach Anspruch 10, das ferner den Schritt des Zugebens eines Säuerungsmittels aufweist, wobei das Säuerungsmittel vor oder nach der Herstellung der groben Emulsion zugegeben wird.

13. Nahrungsmittelprodukt, das eine genusstaugliche Emulsion nach einem der Ansprüche 1 bis 9 aufweist,
wobei das Nahrungsmittelprodukt eine Viskosität von mehr als etwa 3000 cP und weniger als etwa 150000 cP aufweist.

14. Nahrungsmittelprodukt nach Anspruch 13,
wobei das Nahrungsmittelprodukt ein Dressing, eine Suppe, eine Soße, ein Dipp, ein Aufstrich, eine Füllmasse oder ein Getränk ist.

15. Nahrungsmittelprodukt nach Anspruch 15,
wobei das Emulgatorgemisch Ei aufweist, wenn das Nahrungsmittelprodukt Mayonnaise ist.

16. Nahrungsmittelprodukt nach Anspruch 16,
wobei die Mayonnaise weniger als etwa 75,0 Gew.-% Öl aufweist und eine Verteilung im Mund zeigt, die der Verteilung von Vollfettmayonnaise im Mund ähnlich ist.

17. Nahrungsmittelprodukt nach Anspruch 16,
wobei die Mayonnaise einen Oberflächenglanz zeigt, der dem Oberflächenglanz von Vollfettmayonnaise ähnlich ist.

18. Nahrungsmittelprodukt nach Anspruch 16,
wobei das Gemisch Natriumcaseinat oder Weizenproteinaggregate oder beides aufweist.

19. Nahrungsmittelprodukt nach Anspruch 13,
wobei das Nahrungsmittelprodukt 3,8 Gew.-% oder weniger Stärke aufweist.

## Revendications

1. Emulsion comestible comprenant :
(a) d'environ 7,5 à environ 80,0 % en poids d'huile ;
(b) de l'eau ;
(c) de 0,5 à 12,0 % en poids d'émulsifiant comprenant un émulsifiant générateur de viscosité dont 2,0 % en poids sont partiellement ou totalement insolubles dans de l'eau désionisée acidifiée ayant un pH inférieur ou égal à 5,5 ou un émulsifiant générateur de viscosité dont au moins environ 50% en poids correspondent à une protéine, ou les deux
(d) d'environ 0,1 à environ 1,0 % en poids de fibres d'agrumes insolubles ; et
(e) un épaississant
dans laquelle l'émulsion comestible est épaisse ou fluide et en outre
dans laquelle l'émulsifiant générateur de viscosité constitue de 0,1 à 4,0 % en poids de l'émulsion comestible, à condition que, lorsqu'un émulsifiant chimique est utilisé, la quantité d'émulsifiant chimique utilisée soit inférieure à la quantité d'émulsifiant générateur de viscosité.

2. Emulsion comestible selon la revendication 1 dans laquelle l'émulsion comestible est une émulsion d'huile-dans-eau ou une émulsion multiple comprenant une phase huile-dans eau.

3. Emulsion comestible selon la revendication 1 ou 2 dans laquelle l'huile est de l'huile d'avocat, de moutarde, de coco, de graines de coton, de poisson, de graines de lin, de graines de raisin, d'olive, de palme, d'arachide, de colza, de carthame, de sésame, de soja, de tournesol, de la graisse de beurre, de la graisse de chocolat, de la graisse de poulet, de l'huile de coco, ou un mélange de celles-ci.

4. Emulsion comestible selon l'une quelconque des revendications précédentes dans laquelle l'émulsifiant est un mélange d'émulsifiants comprenant d'environ 0,1 à environ 2,5 % en poids d'émulsifiant générateur de viscosité.

5. Emulsion comestible selon l'une quelconque des revendications précédentes dans laquelle au moins un émulsifiant du mélange d'émulsifiants présente un HLB de plus d'environ 8,0.

6. Emulsion comestible selon l'une quelconque des revendications précédentes dans laquelle l'émulsion comestible est une émulsion épaisse comprenant des gouttelettes d'huile, dans laquelle, en outre, au moins environ 75,0 % de toutes les gouttelettes présentes ont un diamètre supérieur à environ 2,5 µm.

7. Emulsion comestible selon l'une quelconque des revendications précédentes dans laquelle l'émulsion comestible est une émulsion fluide comprenant des gouttelettes d'huile, dans laquelle, en outre, au moins environ 80,0 % de toutes les gouttelettes d'huile présentes sont inférieures 10,0 µm.

8. Emulsion comestible selon l'une quelconque des revendications précédentes dans laquelle l'épaississant est un amidon, de la gomme ou un mélange de ceux-ci.

9. Emulsion comestible selon la revendication 8 dans laquelle l'épaississant est un mélange d'amidon et de gomme.

10. Procédé de fabrication d'une émulsion comestible selon l'une quelconque des revendications 1 à 9, comprenant les étapes consistant à :
(a) mélanger, dans aucun ordre particulier, de l'huile, de l'eau, des fibres d'agrumes insolubles, un épaississant et de 0,5 à 12,0 % en poids d'émulsifiant comprenant un émulsifiant générateur de viscosité dont 2,0 % en poids sont partiellement ou totalement insolubles dans de l'eau désionisée acidifiée ayant un pH inférieur ou égal à 5,5 ou un émulsifiant générateur de viscosité dont au moins environ 50 % en poids correspondent à une protéine, ou les deux, afin de fabriquer une émulsion épaisse
(b) recouvrir l'émulsion en cours,
dans lequel l'émulsion en cours peut éventuellement être homogénéisée dans un homogénéisateur afin de produire une émulsion fluide et dans lequel, en outre, l'émulsifiant générateur de viscosité constitue de 0,1 à 4,0 % en poids de l'émulsion comestible, à condition que, lorsqu'un émulsifiant chimique est utilisé, la quantité d'émulsifiant chimique utilisée soit inférieure à la quantité d'émulsifiant générateur de viscosité.

11. Procédé de fabrication d'une émulsion comestible selon la revendication 10 dans lequel l'émulsion épaisse est homogénéisée dans un homogénéisateur et l'homogénéisateur est mis sous pression à une pression d'environ 20,0 à environ 650,0 bar et à une température d'environ 15 °C à environ 70 °C.

12. Procédé de fabrication d'une émulsion comestible selon la revendication 10 comprenant en outre l'étape consistant à ajouter un acidulant, l'acidulant étant ajouté avant ou après la fabrication de l'émulsion épaisse.

13. Produit alimentaire comprenant une émulsion comestible selon l'une quelconque des revendications 1 à 9, dans lequel le produit alimentaire a une viscosité supérieure à environ 3 000 centipoise et inférieure à environ 150 000 centipoise.

14. Produit alimentaire selon la revendication 13 dans lequel le produit alimentaire est un assaisonnement, de la soupe, de la sauce, de la sauce froide pour crudités, de la pâte à tartiner, une garniture ou une boisson.

15. Produit alimentaire selon la revendication 15 dans lequel le mélange émulsifiant comprend de l'oeuf lorsque le produit alimentaire est de la mayonnaise.

16. Produit alimentaire selon la revendication 16 dans lequel la mayonnaise comprend moins d'environ 75,0 % en poids d'huile et présente une dissipation en bouche similaire à la dissipation en bouche de la mayonnaise riche en matières grasses.

17. Produit alimentaire selon la revendication 16 dans lequel la mayonnaise présente une brillance de surface similaire à la brillance de surface de la mayonnaise riche en matières grasses.

18. Produit alimentaire selon la revendication 16 dans lequel le mélange comprend des agrégats de caséine de sodium ou de protéine de petit-lait, ou les deux.

19. Produit alimentaire selon la revendication 13 dans lequel le produit alimentaire comprend 3,8 % en poids d'amidon ou moins.
